# EUROPÄISCHE PATENTSCHRIFT

(11) **EP 1 495 859 B1**
(45) Veröffentlichungstag und Bekanntmachung des Hinweises auf die Patenterteilung: **03.09.2008**
(21) Anmeldenummer: 04015294.4
(22) Anmeldetag: 30.06.2004
(51) Int. Cl.: B32B 3/10, B32B 15/08

(54) **Leichtbaustruktur**
Lightweight material structure
Structure légère

(30) Priorität: 08.07.2003 DE 10330708
(43) Veröffentlichungstag der Anmeldung: 12.01.2005
(73) Patentinhaber: Airbus Deutschland GmbH, 21129 Hamburg (DE)
(72) Erfinder: Vichniakov, Alexei, Dr.-Ing., 39171 Bahrendorf (DE); Schmidt, Hans-Jürgen, Dipl.-Ing., 21614 Buxtehude (DE)
(74) Vertreter: Maiwald, Walter

(56) Entgegenhaltungen:
- EP-A- 0 783 960
- EP-A- 0 900 647
- WO-A-92/12856
- WO-A-97/25198
- US-A- 4 411 380
- US-A- 5 151 311
- US-A- 5 895 699

## Beschreibung

Die Erfindung betrifft eine Leichtbaustruktur, bestehend aus einer Außenhaut sowie einer an dieser angebrachten und mit dieser verbundenen, aus einzelnen Verstärkungselementen bestehenden und als Fachwerk ausgebildeten Verstärkungsstruktur.

Leichtbaustrukturen, wie sie insbesondere auch im Bereich der Luft- und Raumfahrttechnik eingesetzt werden, bestehen häufig aus einer Außenhaut, die auf der Innenseite durch eine zweidimensionale Versteifung verstärkt ist. So ist beispielsweise ein Flugzeugrumpf, dessen Außenhaut mit Hilfe von Stringern und Spanten verstärkt ist, auf diese Weise aufgebaut. Bei der Auslegung solcher Leichtbaustrukturen wird ein besonderer Wert auf die Gewichtsreduzierung gelegt, wobei die Leichtbaustrukturen jedoch in Abhängigkeit vom jeweiligen Anwendungsfall unterschiedliche Festigkeits-, Ermüdungs- und Schadenstoleranzanforderungen erfüllen müssen. Insbesondere im Flugzeugbau bestehen besondere Anforderungen hinsichtlich der schadenstoleranten Eigenschaften der dort verwendeten Leichtbaustrukturen.

Die Erhöhung der Schadenstoleranz solcher Leichtbaustrukturen kann auf unterschiedliche Weise erfolgen. Dazu zählen die Erhöhung der Hautdicke, die

Verwendung zusätzlicher lokaler Versteifungen, die Anpassung der Hautdicke an die örtlichen Belastungsanforderungen und dergleichen. Diese Methoden führen jedoch auch zu einer Erhöhung des Gewichts der Leichtbaustruktur. Eine andere Möglichkeit besteht in der Verwendung von Werkstoffen mit verbesserten schadenstoleranten Eigenschaften, wie z. B. den in der DE 102 38 460 A1 beschriebenen metallischen Schichtwerkstoffen, oder von faserverstärkten Laminaten, wie sie unter dem Warenzeichen GLARE bekannt geworden sind.

Zu den Vorteilen faserverstärkter Laminate zählen neben den sehr guten schadenstoleranten Eigenschaften ihre relativ geringe Dichte im Vergleich zu monolithischen metallischen Werkstoffen. Allerdings besitzen die faserverstärkten Laminate zum gegenwärtigen Zeitpunkt, verglichen mit monolithischen Werkstoffen, teilweise schlechtere statische Festigkeitseigenschaften. Dadurch ist eine Gewichtsreduzierung der Leichtbaustruktur nur in einigen Bereichen erzielbar, die zum großen Teil nach schadenstoleranten Eigenschaften ausgelegt sind. Außerdem ist die Herstellung faserverstärkter Laminate wegen der teilweise komplizierten Klebevorbehandlung dünner Bleche, der Verwendung von zusätzlichen Pre-preg-Folien sowie der Notwendigkeit manueller Positionierung und Vorbereitung für das nachfolgende Kleben vergleichsweise aufwendig. Im Ergebnis können deshalb die Produktionskosten deutlich höher liegen als bei der Verwendung monolithischer Bleche. Deutlich geringere Kosten sind bei der Herstellung von metallischen Schichtwerkstoffen ohne Faserverstärkung zu erwarten, wie sie in der DE 102 38 460 A1 beschrieben sind.

Bei beiden Werkstoffgruppen führt die Verwendung von zusätzlich lokal aufgebrachten Versteifungen mit einer Fachwerkstruktur zur einer Verbesserung der schadenstoleranten Eigenschaften. Bei der Ausbreitung von Ermüdungsrissen, die länger als der Abstand zweier benachbarter Stringer sind, zeigen die metallischen Schichtwerkstoffe mit zusätzlicher Fachwerkstruktur im Vergleich zu einer Leichtbaustruktur mit einer Außenhaut aus monolithischem Blech bessere schadenstolerante Eigenschaften, während bei Risslängen bis zum doppelten Stringerabstand das Risswachstum in diesen laminierten Werkstoffen höher als in konventionell aufgebauten Leichtbaustrukturen mit Hautblech aus monolithischen Werkstoffen ist. Insbesondere hat die Verwendung von zusätzlichen Streifen zwischen den Stringern in Fachwerkstruktur zu einer Verringerung des Risswachstums geführt. So hat sich gezeigt, dass sich insbesondere bei über längere Zeit intakt bleibenden Mittelstreifen in Form zusätzlicher Doppler zwischen zwei Stringern das Risswachstum in der Außenhaut derart verlangsamt, dass eine um bis zu dem Faktor fünf höhere Lebensdauer der Leichtbaustruktur zu erzielen ist.

Aufgabe der Erfindung ist es, eine Leichtbaustruktur der eingangs genannten Art bereitzustellen, die eine deutlich verbesserte Schadenstoleranz, insbesondere in Bezug auf das Ermüdungsrissverhalten, aufweist. Weiterhin ist es Aufgabe der Erfindung, ein Verfahren zur Herstellung einer derartigen Struktur anzugeben

Die Erfindung löst die erste Aufgabe durch die Bereitstellung einer Leichtbaustruktur mit den Merkmalen des Anspruchs 1. Es ist vorgesehen, dass bei einer derartigen Struktur jeweils zwischen der Außenhaut und der Verstärkungsstruktur eine ebenfalls durch Kleben aufgebrachte zusätzliche mit Fasern verstärkte Schicht angeordnet ist. Die weitere Aufgabe wird durch ein Verfahren mit den Merkmalen des Anspruchs 16 gelöst, bei dem die Fasern vor oder während des Klebevorganges in eine Kunststoffmatrix eingebunden werden. Vorteilhafte Weiterbildungen der Erfindung sind in den weiteren Ansprüchen angegeben.

Durch die Verwendung einer zusätzlichen Schicht zwischen den Hautblech und der angeklebten Fachwerkstruktur, bei der es sich sowohl um die Stringer als auch um dazwischen liegend angeordnete Mittelstreifen handelt, wird die angestrebte Erhöhung der schadenstoleranten Eigenschaften von Leichtbaustrukturen dadurch erreicht, dass bei der Ausbreitung eines Ermüdungsrisses im Bereich der Außenhaut die zur Versteifung angebrachte Fachwerkstruktur über einen deutlich längeren Zeitraum der Rissausbreitung intakt bleibt und dadurch die Rissausbreitungsgeschwindigkeit wesentlich verlangsamt wird.

Die Vorteile der Erfindung resultieren daher aus der Möglichkeit einer Reduzierung des Gewichtes von Leichtbaustrukturen, insbesondere von Flugzeugschalen, mit hohen schadenstoleranten Anforderungen. Im Flugzeugrumpf sind diese Anforderungen vor allem in den Oberschalen von besonderer Bedeutung. Durch die erfindungsgemäß vorgesehene Verwendung einer Fachwerkstruktur mit einer zusätzlichen Zwischenschicht ist die Möglichkeit gegeben, deutlich, d.h. um bis zu 20 %, geringere Blechdicken zu verwenden und dadurch das Gesamtgewicht der Leichtbaustruktur signifikant zu verringern.

Nachfolgend soll die Erfindung anhand von in der Zeichnung dargestellten Ausführungsbeispielen näher erläutert werden. Es zeigen
- Fig. 1 - 4: schematische Darstellungen von verstärkten Leichtbaustrukturen und
- Fig. 5: einen Vergleich des Rißwachstums in einer Außenhaut mit zusätzlich angebrachter Fachwerkstruktur bei intaktem und gebrochenem Mittelstreifen.

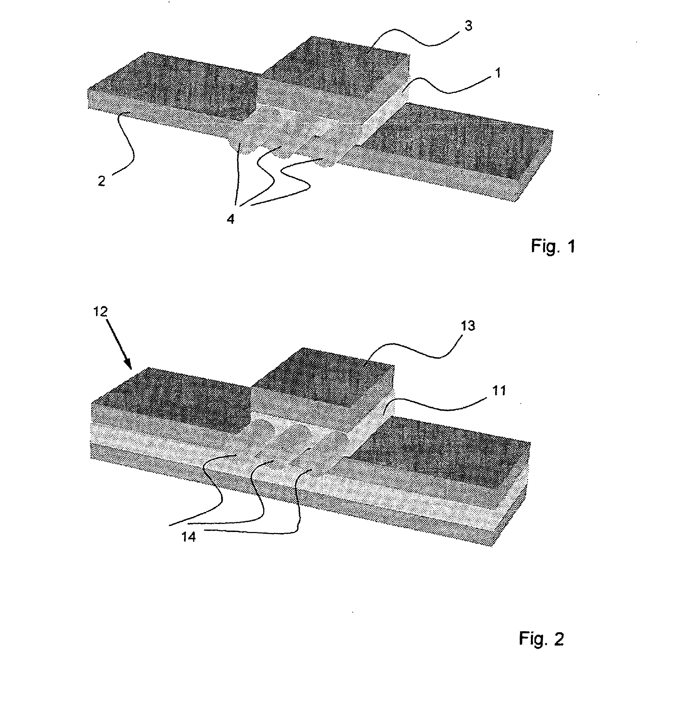

In den Figuren 1 bis 4 sind unterschiedliche Ausführungsformen einer Leichtbaustruktur dargestellt, wobei in allen Fällen eine zusätzliche, mit Fasern verstärkte Schicht zwischen einem Hautblech und einer darauf mittels Kleben angebrachten Fachwerkstruktur vorgesehen ist. Diese Schicht hat die Aufgabe, bei der Rißausbreitung im Hautblech einen Anriß von zur Verstärkung aufgebrachten Mittelstreifen zu verhindern und dadurch die gesamten schadenstoleranten Eigenschaften der Struktur zu erhöhen.

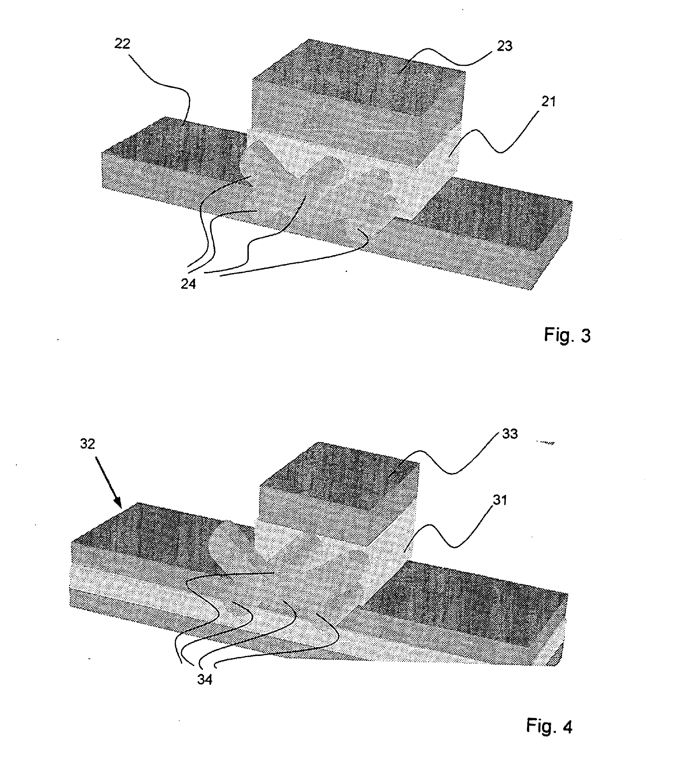

Fig. 1 zeigt eine eindimensional aufgebaute Zusatzschicht 1, die zwischen einem Hautblech 2 aus einem monolithischen Werkstoff und einer darauf mittels Kleben angebrachten Fachwerkstruktur 3 aufgebracht ist. Fig. 2 zeigt einen analogen Aufbau einer Leichtbaustruktur, bei der eine Zusatzschicht 11 auf einem Hautblech 12 aus einem laminierten Werkstoff, ebenfalls unterhalb einer Fachwerkstruktur 3, aufgebracht ist. Die Figuren 3 und 4 zeigen im Prinzip gleichartige Verstärkungsstrukturen, bei denen jeweils eine zweidimensional aufgebaute Zusatzschicht 21 bzw. 31 auf einem Hautblech 22 aus einem monolithischen Werkstoff bzw. auf einem Hautblech 32 aus einem laminierten Werkstoff unterhalb einer Fachwerkstruktur 23 bzw. 33 aufgebracht ist.

In allen Fällen bestehen die zusätzlichen Schichten 1, 11, 21, 31, ebenso wie die Fachwerkstrukturen 3, 13, 23, 33, aus einzelnen Streifen, deren Breite zwischen etwa 10 und 80 mm variabel ist. Der Aufbau der zusätzlichen Zwischenschichten kann dabei, wie in den Figuren 1 und 2 gezeigt, aus eindimensional positionierten Fasern 4 bzw. 14 bestehen oder aber, wie bei den in den Figuren 3 und 4 dargestellten Ausführungsbeispielen, aus zweidimensional aus Fasern 24 bzw. 34 gewebten Strukturen, beispielsweise in Form von Geweben, Gittern usw., bestehen. Die Fasern weisen vorzugsweise eine Mindestlänge von 10 mm auf, ihr Durchmesser variiert zwischen etwa 0.001 und 0.3 mm.

Als Faserwerkstoff können Glas-, Kohlenstoff-, polyaromatische Amid-, Aluminiumoxid-, Siliziumcarbid- oder Basaltfasern verwendet werden, ebenso wie Aluminium-, Titan- oder Magnesiumdrähte. Die Fasern werden vor oder während des Klebevorganges in eine Kunststoffmatrix bzw. in den Klebstoff eingebunden und die zusätzliche Schicht wird in einem Klebevorgang zusammen mit der Fachwerkstruktur an das Hautblech angeklebt. Als Klebwerkstoff sind dabei alle gängigen Klebsysteme geeignet. Die Schichtdicke beträgt nach dem Klebevorgang zusammen mit dem Kleber etwa 0.05 bis 0.3 mm, während die Dicke der Fachwerkstreifen zwischen etwa 0.6 und 2.0 mm variiert.

Als Hautbleche kommen sowohl monolithische Bleche aus Aluminium-, Magnesium- oder Titanlegierungen als auch laminierte Werkstoffe aus zwei oder mehr zusammengeklebten und gegebenenfalls mit Zwischenlagen aus Folie versehenen Blechen in Betracht. In einer Leichtbaustruktur können dabei auch mehrere zusätzliche Schichten und Fachwerkstrukturen verwendet werden, wobei diese Struktur auch mit Stringern versteift werden kann.

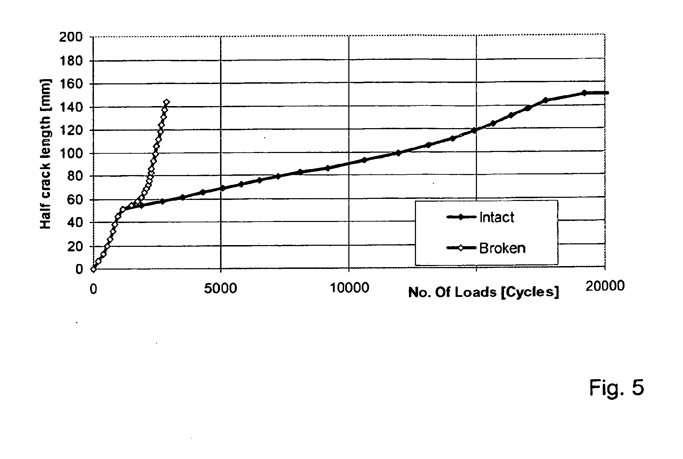

Fig. 5 zeigt abschließend die mit dem vorangehend beschriebenen Aufbau erzielbare deutliche Erhöhung der schadenstoleranten Eigenschaften einer solchen Leichtbaustruktur. Die auf einem Hautblech aus monolithischen oder laminierten Werkstoff aufgebrachte Zusatzschicht verhindert ein frühzeitiges Versagen der aufgeklebten Fachwerkstruktur und bewirkt so eine Verlangsamung der Ausbreitungsgeschwindigkeit eines Ermüdungsrisses in der Außenhaut um ein Mehrfaches.

## Patentansprüche

1. Leichtbaustruktur, bestehend aus einer Außenhaut sowie einer an dieser angebrachten und durch Kleben mit dieser verbundenen Verstärkungsstruktur,
wobei zwischen der Außenhaut (2, 12, 22, 32) und der Verstärkungsstruktur (3, 13, 23, 33) wenigstens eine ebenfalls durch Kleben aufgebrachte, durch Fasern (4, 14, 24, 34) verstärkte zusätzliche Schicht (1, 11, 21, 31) angeordnet ist;
wobei die zusätzliche Schicht aus einzelnen Streifen besteht;
wobei die Außenhaut als Hautblech ausgeführt ist;
wobei das Hautblech ein monolithisches Blech aus einer Aluminium-, Magnesium- oder Titanlegierung oder einen laminierten Werkstoff aus zwei oder mehr zusammengeklebten Blechen aufweist;
wobei die Breite der Streifen etwa zwischen 10 mm und 80 mm liegt.

2. Leichtbaustruktur gemäß Anspruch 1, **dadurch gekennzeichnet, dass** die zusätzlichen Schichten (1, 11) mit eindimensional positionierten Fasern (4, 14) verstärkt sind.

3. Leichtbaustruktur gemäß Anspruch 1, **dadurch gekennzeichnet, dass** die zusätzlichen Schichten (21, 31) mit zu zweidimensional gewebten Strukturen verbundenen Fasern (24, 34) verstärkt sind.

4. Leichtbaustruktur gemäß einem der Ansprüche 1 bis 3, **dadurch gekennzeichnet, dass** die Fasern (4, 14, 24, 34) aus Glas bestehen.

5. Leichtbaustruktur gemäß einem der Ansprüche 1 bis 3, **dadurch gekennzeichnet, dass** die Fasern (4, 14, 24, 34) aus Kohlenstoff bestehen.

6. Leichtbaustruktur gemäß einem der Ansprüche 1 bis 3, **dadurch gekennzeichnet, dass** die Fasern (4, 14, 24, 34) aus polyaromatischen Amid bestehen.

7. Leichtbaustruktur gemäß einem der Ansprüche 1 bis 3, **dadurch gekennzeichnet, dass** die Fasern (4, 14, 24, 34) aus Aluminiumoxid bestehen.

8. Leichtbaustruktur gemäß einem der Ansprüche 1 bis 3, **dadurch gekennzeichnet, dass** die Fasern (4, 14, 24, 34) aus Siliziumcarbid bestehen.

9. Leichtbaustruktur gemäß einem der Ansprüche 1 bis 3, **dadurch gekennzeichnet, dass** die Fasern (4, 14, 24, 34) aus Mineralfasern, vorzugsweise Basalt bestehen.

10. Leichtbaustruktur gemäß einem der Ansprüche 1 bis 3, **dadurch gekennzeichnet, dass** die Fasern (4, 14, 24, 34) aus Aluminiumdrähten bestehen.

11. Leichtbaustruktur gemäß einem der Ansprüche 1 bis 3, **dadurch gekennzeichnet, dass** die Fasern (4, 14, 24, 34) aus Titandrähten bestehen.

12. Leichtbaustruktur gemäß einem der Ansprüche 1 bis 3, **dadurch gekennzeichnet, dass** die Fasern (4, 14, 24, 34) aus Magnesiumdrähten bestehen.

13. Leichtbaustruktur gemäß einem der Ansprüche 1 bis 12, **dadurch gekennzeichnet, dass** die Fasern (4, 14, 24, 34) einen Durchmesser zwischen etwa 0.001 und 0.3 mm aufweisen.

14. Leichtbaustruktur gemäß einem der Ansprüche 1 bis 13, **dadurch gekennzeichnet, dass** die Fasern (4, 14, 24, 34) eine Länge von wenigstens etwa 10 mm aufweisen.

15. Leichtbaustruktur gemäß einem der Ansprüche 1 bis 14, **dadurch gekennzeichnet, dass** die Außenhaut (12, 32) aus einem laminierten Werkstoff besteht.

16. Verfahren zur Herstellung einer Leichtbaustruktur gemäß einem der Ansprüche 1 bis 15, **dadurch gekennzeichnet, dass** die Fasern (4, 14, 24, 34) vor oder während des Klebevorganges in eine Kunststoffmatrix eingebunden werden.

17. Verfahren gemäß Anspruch 16, **dadurch gekennzeichnet, dass** die Kunststoffmatrix von dem Klebstoff gebildet wird.

18. Verfahren gemäß Anspruch 16 oder 17, **dadurch gekennzeichnet, dass** die zusätzliche Schicht (1, 11, 21, 31) zusammen mit der Fachwerkstruktur (3, 13, 23, 33) in einem Klebevorgang an die Außenhaut angeklebt wird.

19. Verfahren gemäß einem der Ansprüche 16 bis 18, **dadurch gekennzeichnet, dass** die Schichtdicke zusammen mit dem Kleber nach dem Klebevorgang eine Stärke von etwa 0.05 bis 0.3 mm aufweist.

## Claims

1. Lightweight structure comprising a outer skin and a reinforcing structure attached thereto and connected thereto by adhesive bonding,
whereby arranged between the outer skin (2, 12, 22, 32) and the reinforcing structure (3, 13, 23, 33) there is at least one additional layer (1,11,21,31) reinforced by fibres (4, 14, 24, 34) also attached by adhesive bonding,
whereby the additional layer comprises individual strips,
whereby the outer skin is embodied as a skin sheet;
whereby the skin sheet comprises a monolithic sheet made of an aluminium, magnesium or titanium alloy or a laminated material comprising two or more adhesively bonded sheets,
wherein the width of the strips is approximately between 10 mm and 80 mm.

2. Lightweight structure according to claim 1, **characterised in that** the additional layers (1, 11) are reinforced with unidimensionally positioned fibres (4, 14).

3. Lightweight structure according to claim 1, **characterised in that** the additional layers (21, 31) are reinforced with fibres (24, 34) connected to two-dimensionally woven structures.

4. Lightweight structure according to any one of claims 1 to 3, **characterised in that** the fibres (4, 14, 24, 34) comprise glass.

5. Lightweight structure according to any one of claims 1 to 3, **characterised in that** the fibres (4, 14, 24, 34) comprise carbon.

6. Lightweight structure according to any one of claims 1 to 3, **characterised in that** the fibres (4, 14, 24, 34) comprise polyaromatic amide.

7. Lightweight structure according to any one of claims 1 to 3, **characterised in that** the fibres (4, 14, 24, 34) comprise aluminium oxide.

8. Lightweight structure according to any one of claims 1 to 3, **characterised in that** the fibres (4, 14, 24, 34) comprise silicon carbide.

9. Lightweight structure according to any one of claims 1 to 3, **characterised in that** the fibres (4, 14, 24, 34) comprise mineral fibres, preferably basalt.

10. Lightweight structure according to any one of claims 1 to 3, **characterised in that** the fibres (4, 14, 24, 34) comprise aluminium wires.

11. Lightweight structure according to any one of claims 1 to 3, **characterised in that** the fibres (4, 14, 24, 34) comprise titanium wires.

12. Lightweight structure according to any one of claims 1 to 3, **characterised in that** the fibres (4, 14, 24, 34) comprise magnesium wires.

13. Lightweight structure according to any one of claims 1 to 12, **characterised in that** the fibres (4, 14, 24, 34) have a diameter of between approximately 0.001 and 0.3 mm.

14. Lightweight structure according to any one of claims 1 to 13, **characterised in that** the fibres (4, 14, 24, 34) have a length of at least approximately 10 mm.

15. Lightweight structure according to any one of claims 1 to 14, **characterised in that** the outer skin (12, 32) comprises a laminated material.

16. Method for producing a lightweight structure according to any one of claims 1 to 15, **characterised in that** the fibres (4, 14, 24, 34) are embedded in a synthetic matrix prior to or during the adhesive bonding process.

17. Method according to claim 16, **characterised in that** the synthetic matrix is formed from the adhesive.

18. Method according to claim 16 or 17, **characterised in that** the additional layer (1, 11, 21, 31) together with the framework structure (3, 13, 23, 33) are bonded to the outer skin in an adhesive bonding process.

19. Method according to any one of claims 16 to 18, **characterised in that** the layer thickness together with the adhesive after the adhesive bonding process is approximately 0.05 to 0.3 mm.

## Revendications

1. Structure légère, constituée d'une peau extérieure ainsi que d'une structure de renfort montée sur celle-ci et reliée à celle-ci par collage,
dans laquelle au moins une couche supplémentaire (1, 11, 21, 31) renforcée de fibres (4, 14, 24, 34), également appliquée par collage, est disposée entre la peau extérieure (2,12, 22, 32) et la structure de renfort (3, 13, 23, 33) ;
dans laquelle la couche supplémentaire est constituée de bandes individuelles ;
dans laquelle la peau extérieure est réalisée sous forme de tôle d'habillage ;
dans laquelle la tôle d'habillage est une tôle monolithique en un alliage d'aluminium, de magnésium ou de titane ou en un matériau laminé de deux ou plusieurs tôles collées ensemble ;
dans laquelle la largeur des bandes est sensiblement comprise entre 10 mm et 80 mm.

2. Structure légère selon la revendication 1, **caractérisée en ce que** les couches supplémentaires (1, 11) sont renforcées de fibres (4, 14) disposées de manière unidimensionnelle.

3. Structure légère selon la revendication 1, **caractérisée en ce que** les couches supplémentaires (21,31) sont renforcées de fibres (24, 34) reliées en structures tissées de manière bidimensionnelle.

4. Structure légère selon l'une des revendications 1 à 3, **caractérisée en ce que** les fibres (4, 14, 24, 34) sont réalisées en verre.

5. Structure légère selon l'une des revendications 1 à 3, **caractérisée en ce que** les fibres (4, 14, 24, 34) sont réalisées en carbone.

6. Structure légère selon l'une des revendications 1 à 3, **caractérisée en ce que** les fibres (4, 14, 24, 34) sont réalisées en amide polyaromatique.

7. Structure légère selon l'une des revendications 1 à 3, **caractérisée en ce que** les fibres (4, 14, 24, 34) sont réalisées en oxyde d'aluminium.

8. Structure légère selon l'une des revendications 1 à 3, **caractérisée en ce que** les fibres (4, 14, 24, 34) sont réalisées en carbure de silicium.

9. Structure légère selon l'une des revendications 1 à 3, **caractérisée en ce que** les fibres (4, 14, 24, 34) sont réalisées en fibres minérales, de préférence de basalte.

10. Structure légère selon l'une des revendications 1 à 3, **caractérisée en ce que** les fibres (4, 14, 24, 34) sont réalisées en fils d'aluminium.

11. Structure légère selon l'une des revendications 1 à 3, **caractérisée en ce que** les fibres (4, 14, 24, 34) sont réalisées en fils de titane.

12. Structure légère selon l'une des revendications 1 à 3, **caractérisée en ce que** les fibres (4, 14, 24, 34) sont réalisées en fils de magnésium.

13. Structure légère selon l'une des revendications 1 à 12, **caractérisée en ce que** les fibres (4, 14, 24, 34) ont un diamètre compris entre environ 0,001 et 0,3 mm.

14. Structure légère selon l'une des revendications 1 à 13, **caractérisée en ce que** les fibres (4, 14, 24, 34) ont une longueur d'au moins 10 mm environ.

15. Structure légère selon l'une des revendications 1 à 14, **caractérisée en ce que** la peau extérieure (12, 32) est constituée d'un matériau laminé.

16. Procédé de fabrication d'une structure légère selon l'une des revendications 1 à 15, **caractérisé en ce que** les fibres (4, 14, 24, 34) sont noyées dans une matrice de matière plastique, avant ou pendant l'opération de collage.

17. Procédé selon la revendication 16, **caractérisé en ce que** la matrice de matière plastique est formée par la colle.

18. Procédé selon la revendication 16 ou 17, **caractérisé en ce que** la couche supplémentaire (1, 11, 21, 31) est collée à la peau extérieure, conjointement avec la structure en treillis (3, 13, 23, 33), en une opération de collage.

19. Procédé selon l'une des revendications 16 à 18, **caractérisé en ce que** l'épaisseur de couche, conjointement avec la colle après l'opération de collage, a une épaisseur d'environ 0,05 à 0,3 mm.
